# EUROPEAN PATENT SPECIFICATION

(11) **EP 4 311 913 B1**
(45) Date of publication and mention of the grant of the patent: **13.05.2026**
(21) Application number: 23181374.2
(22) Date of filing: 26.06.2023
(51) Int. Cl.: F01D 5/18, F01D 9/06

(54) **TURBOMACHINE AIRFOIL HAVING IMPINGEMENT COOLING PASSAGES**
TURBOMASCHINENSCHAUFEL MIT PRALLKÜHLUNGSKANÄLEN
AUBE DE TURBOMACHINE AVEC PASSAGES DE REFROIDISSEMENT PAR IMPACT

(30) Priority: 29.07.2022 US 202217877085
(43) Date of publication of application: 31.01.2024
(73) Proprietor: GE Vernova Technology GmbH, 5400 Baden (CH)
(72) Inventor: MATTHEWS, John M., Greenville, 29615 (US); PORTER, Christopher Donald, Greenville, 29615 (US); HAFNER, Matthew Troy, Greenville, 29615 (US)
(74) Representative: Novagraaf Group

(56) References cited:
- US-A- 4 252 501
- US-A1- 2011 103 971
- US-A1- 2020 277 860
- US-B2- 11 199 097

## Description

### FIELD

The present invention relates to an airfoil having a plurality of cooling passages.

### BACKGROUND

Turbomachines are utilized in a variety of industries and applications for energy transfer purposes. For example, a gas turbine engine generally includes a compressor section, a combustion section, a turbine section, and an exhaust section. The compressor section progressively increases the pressure of a working fluid entering the gas turbine engine and supplies this compressed working fluid to the combustion section. The compressed working fluid and a fuel (e.g., natural gas) mix within the combustion section and burn in a combustion chamber to generate high pressure and high temperature combustion gases. The combustion gases flow from the combustion section into the turbine section where they expand to produce work. For example, expansion of the combustion gases in the turbine section may rotate a rotor shaft connected, e.g., to a generator to produce electricity. The combustion gases then exit the gas turbine as exhaust gases via the exhaust section.

Turbomachine efficiency may be related, at least in part, to the temperature of the combustion gases flowing through the turbine section. For example, the higher the temperature of the combustion gases, the greater the overall efficiency of the turbine. The maximum temperature of the combustion gases may be limited, at least in part, by material properties of the various turbine components such as the airfoils used in the turbine stator vanes and the turbine rotor blades. As such, the components in the turbine section may include various cooling circuits through which compressed air from the compressor section circulates to provide cooling to the various turbine components. However, using a large amount of air from the compressor section to cool the various turbine components may negatively impact the turbomachine efficiency.

Accordingly, an improved airfoil having a cooling circuit that provides adequate cooling to the airfoil while minimizing the amount of air supplied to the cooling circuit from the compressor section is desired and would be appreciated in the art.

US 2020/277860 relates to a blade for a turbine blade that includes a suction-side side wall and a pressure-side side wall that enclose a cavity at least partially in a manner which extends along a profile centre line from a common front edge to a common rear edge and in a span width direction from a root-side end to a tip-side end. A first perforated impingement cooling wall which is provided with openings for the impingement cooling of the front edge and at least one further perforated impingement cooling wall for the impingement cooling of a section of the suction-side and/or pressure-side side wall are provided in the interior along the span width. The impingement cooling openings of the first impingement cooling wall and the at least one second impingement cooling wall are connected in series in terms of flow. US 4 252 501 A, US 2011/103971 A1 and US 11 199 097 B2 disclose other examples of airfoils.

### BRIEF DESCRIPTION

Aspects and advantages of the airfoils and stator vanes in accordance with the present disclosure will be set forth in part in the following description, or may be obvious from the description, or may be learned through practice of the technology.

In accordance with one embodiment, an airfoil is provided. The airfoil includes a leading edge, a trailing edge, a base, and a tip. The airfoil further includes a pressure side wall and a suction side wall that extend between the leading edge, the trailing edge, the base, and the tip. The airfoil further includes a plurality of passages that are defined within the airfoil and that extend from an inlet at one of the base or the tip. Each passage of the plurality of passages is defined at least partially by a primary impingement wall and a solid side wall. The primary impingement wall is spaced apart from one of the pressure side wall or the suction side wall such that a primary impingement gap is defined therebetween. The primary impingement wall defines a plurality of impingement apertures that direct air in discrete jets across the impingement gap to impinge upon an interior surface of the airfoil.

In accordance with another embodiment, a stator vane with said airfoil is provided.

These and other features, aspects and advantages of the present airfoils and stator vanes will become better understood with reference to the following description and appended claims, which define the invention. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present airfoils and stator vanes, including the best mode of making and using the present systems and methods, directed to one of ordinary skill in the art, is set forth in the specification, which makes reference to the appended figures, in which:
FIG. 1 is a schematic illustration of a turbomachine. in accordance with embodiments of the present disclosure;
FIG. 2 illustrates a partial cross-sectional side view of a turbine section of the turbomachine of FIG. 1, in accordance with embodiments of the present disclosure;
FIG. 3 illustrates a perspective view of a stator vane, in accordance with embodiments of the present disclosure;
FIG. 4 illustrates a planar view of an outer platform of a stator vane from along the radial direction R, in accordance with embodiments of the present disclosure;
FIG. 5 illustrates a planar view of an inner platform of a stator vane from along the radial direction R, in accordance with embodiments of the present disclosure;
FIG. 6 illustrates a cross-sectional view of the stator vane shown in FIG. 3 from along the line 6-6, in accordance with the present invention;
FIG. 7 illustrates an enlarged view of the outline detail shown in FIG. 6, in accordance with the present invention;
FIG. 8 illustrates a perspective view of an airfoil in which a plurality of passages are shown with dashed lines, in accordance with the present invention;
FIG. 9 schematically illustrates a cross-sectional view of the airfoil shown in FIG. 7 from along the line 9-9, in accordance with embodiments of the present invention; and
FIG. 10 schematically illustrates a cross-sectional view of the airfoil shown in FIG. 7 from along the line 10-10, in accordance with embodiments of the present invention,

### DETAILED DESCRIPTION

Reference now will be made in detail to embodiments of the airfoils and stator vanes according to the present invention, one or more examples of which are illustrated in the drawings. Each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present invention covers such modifications and variations as come within the scope of the appended claims and their equivalents.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components.

The term "fluid" may be a gas or a liquid. The term "fluid communication" means that a fluid is capable of making the connection between the areas specified.

As used herein, the terms "upstream" (or "forward") and "downstream" (or "aft") refer to the relative direction with respect to fluid flow in a fluid pathway. For example, "upstream" refers to the direction from which the fluid flows, and "downstream" refers to the direction to which the fluid flows. The term "radially" refers to the relative direction that is substantially perpendicular to an axial centerline of a particular component, the term "axially" refers to the relative direction that is substantially parallel and/or coaxially aligned to an axial centerline of a particular component, and the term "circumferentially" refers to the relative direction that extends around the axial centerline of a particular component.

Terms of approximation, such as "about," "approximately," "generally," and "substantially," are not to be limited to the precise value specified. In at least some instances, the approximating language may correspond to the precision of an instrument for measuring the value, or the precision of the methods or machines for constructing or manufacturing the components and/or systems. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values. When used in the context of an angle or direction, such terms include within ten degrees greater or less than the stated angle or direction. For example, "generally vertical" includes directions within ten degrees of vertical in any direction, e.g., clockwise or counter-clockwise.

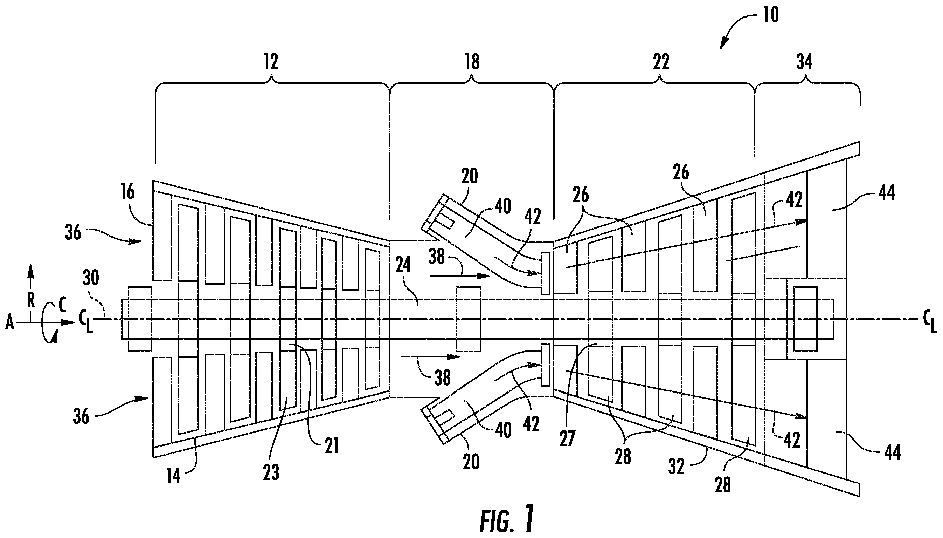

Referring now to the drawings, FIG. 1 illustrates a schematic diagram of one embodiment of a turbomachine, which in the illustrated embodiment is a gas turbine engine 10. Although an industrial or land-based gas turbine is shown and described herein, the present disclosure is not limited to an industrial or land-based gas turbine unless otherwise specified in the claims. For example, the invention as described herein may be used in any type of turbomachine including but not limited to a steam turbine, an aircraft gas turbine, or a marine gas turbine.

As shown in FIG. 1, the gas turbine engine 10 generally includes a compressor section 12. The compressor section 12 includes a compressor 14. The compressor includes an inlet 16 that is disposed at an upstream end of the gas turbine engine 10. The gas turbine engine 10 further includes a combustion section 18 having one or more combustors 20 disposed downstream from the compressor section 12. The gas turbine engine 10 further includes a turbine section 22 that is downstream from the combustion section 18. A shaft 24 extends generally axially through the gas turbine engine 10.

The compressor section 12 may generally include a plurality of rotor disks 21 and a plurality of rotor blades 23 extending radially outwardly from and connected to each rotor disk 21. Each rotor disk 21 in turn may be coupled to or form a portion of the shaft 24 that extends through the compressor section 12. The rotor blades 23 of the compressor section 12 may include turbomachine airfoils that define an airfoil shape (e.g., having a leading edge, a trailing edge, and side walls extending between the leading edge and the trailing edge).

The turbine section 22 may generally include a plurality of rotor disks 27 and a plurality of rotor blades 28 extending radially outwardly from and being interconnected to each rotor disk 27. Each rotor disk 27 in turn may be coupled to or form a portion of the shaft 24 that extends through the turbine section 22. The turbine section 22 further includes an outer casing 32 that circumferentially surrounds the portion of the shaft 24 and the rotor blades 28. The turbine section 22 may include stator vanes or stationary nozzles 26 extending radially inward from the outer casing 32. The rotor blades 28 and stator vanes 26 may be arranged in alternating stages along an axial centerline 30 of gas turbine 10. Both the rotor blades 28 and the stator vanes 26 may include turbomachine airfoils that define an airfoil shape (e.g., having a leading edge, a trailing edge, and side walls extending between the leading edge and the trailing edge).

In operation, ambient air 36 or other working fluid is drawn into the inlet 16 of the compressor 14 and is progressively compressed to provide a compressed air 38 to the combustion section 18. The compressed air 38 flows into the combustion section 18 and is mixed with fuel to form a combustible mixture. The combustible mixture is burned within a combustion chamber 40 of the combustor 20, thereby generating combustion gases 42 that flow from the combustion chamber 40 into the turbine section 22. Energy (kinetic and/or thermal) is transferred from the combustion gases 42 to the rotor blades 28, causing the shaft 24 to rotate and produce mechanical work. The spent combustion gases 42 ("exhaust gases") exit the turbine section 22 and flow through the exhaust diffuser 34 across a plurality of struts or main airfoils 44 that are disposed within the exhaust diffuser 34.

The gas turbine engine 10 may define a cylindrical coordinate system having an axial direction A extending along the axial centerline 30 coinciding with the shaft 24, a radial direction R perpendicular to the axial centerline 30, and a circumferential direction C extending around the axial centerline 30.

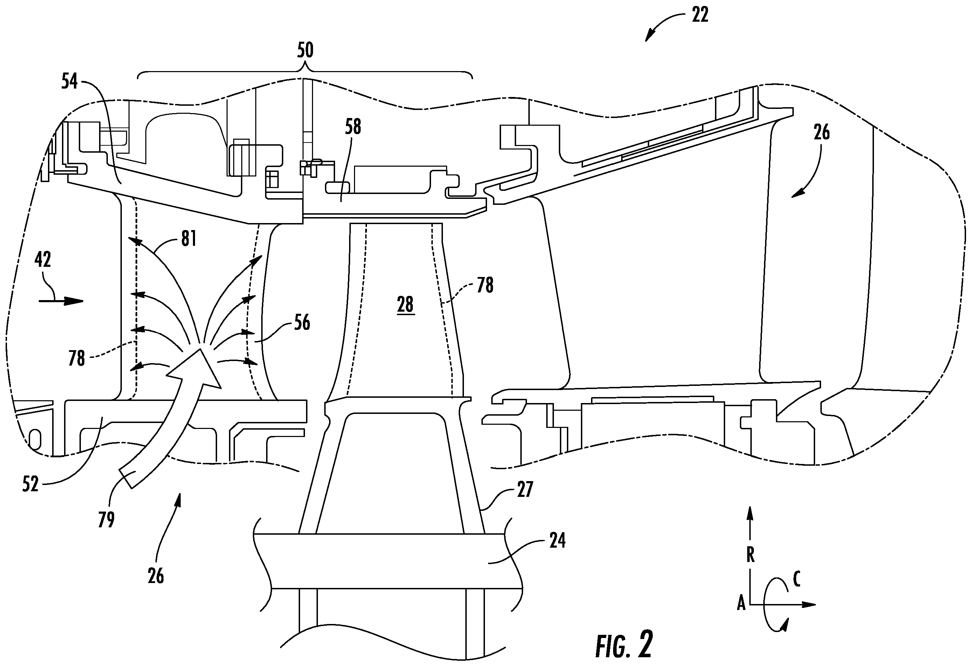

FIG. 2 is a partial cross-sectional side view of the turbine section 22 of the gas turbine engine 10, in accordance with embodiments of the present disclosure. The turbine section 22 may include one or more stages 50 that each include a set of rotor blades 28 coupled to a rotor disk 27 that may be rotatably attached to the shaft 24. Each stage of the one or more stages 50 may further include a set of stator vanes 26. The stator vane 26 described herein may be employed in a first stage, a second stage, a third stage, or others. As used herein, "first stage" refers to the stage immediately downstream of the combustion section 18, such that the combustion gases engage the first stage stator vane immediately upon exit of the combustion section. In exemplary embodiments, the stator vane 26 described herein may be a first stage stator vane.

Each stator vane 26 may include at least one airfoil 56 that extends in the radial direction R between an inner platform or endwall 52 and an outer platform or endwall 54. The circumferentially adjacent outer platforms 54 of each stator vane 26 may be coupled together to form an outer annular ring extending around an inner annular ring of the circumferentially adjacent inner platforms 52 of each stator vane 26. The at least one airfoil 56 may extend between the two annular rings formed by the platforms 52, 54. The turbine section 22 may also include shroud segments 58, which may be disposed downstream of the outer platform 54 to direct combustion gases 42 flowing past the stator vanes 26 to the rotor blades 28.

Structures or components disposed along the flow path of the combustion gases 42 may be referred to as hot gas path components. In one example, the hot gas path component may be the stator vane 26 and/or the rotor blade 28. In some embodiments, to cool the hot gas path components, cooling features, such as impingement sleeves, cooling channels, cooling holes, etc. may be disposed within the hot gas path components, as indicated by the dashed line 78. For example, cooling air as indicated by an arrow 79 may be routed from the compressor section 12 or elsewhere and directed through the cooling features as indicated by arrows 81. As previously mentioned, to maintain high efficiency of the gas turbine engine 10, it is desirable to minimize the amount of cooling air 79 drawn from the compressor section 12 to cool the hot gas path components 26, 28.

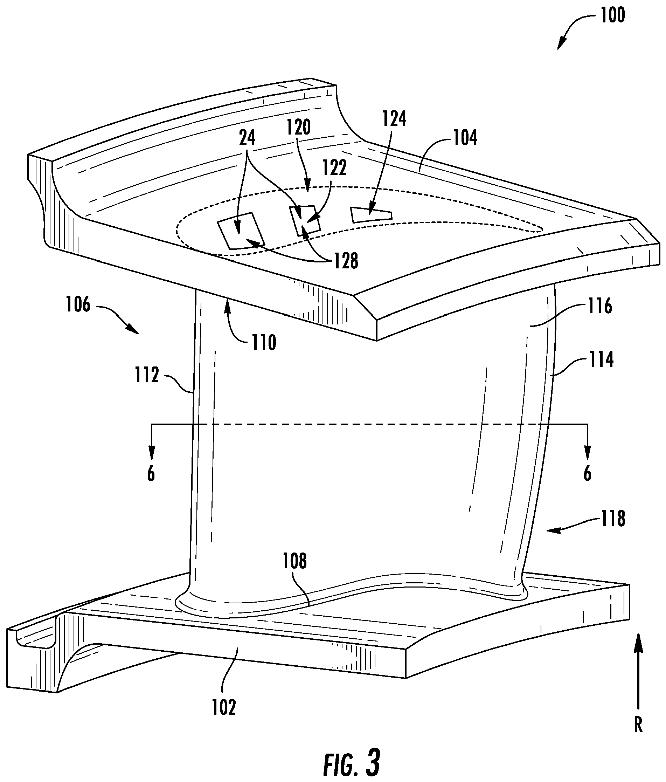

Referring now to FIG. 3, a perspective view of a stator vane 100 (26 in FIGS. 1 and 2) is illustrated in accordance with embodiments of the present disclosure. In exemplary embodiments, the stator vane 100 may be a first stage stator vane, such that the stator vane 100 engages the combustion gases immediately after the combustion gases 42 exit the combustion section 18. As shown, the stator vane 100 includes an inner platform 102 spaced apart (e.g., radially spaced apart) from an outer platform 104. The inner platform 102 and the outer platform 104 may define the radially inward/outward flow boundary for the combustion gases 42. An airfoil 106 may extend between the inner platform 102 and the outer platform 104. Particularly, the airfoil 106 may extend radially between a base 108 coupled to the inner platform 102 and a tip 110 coupled to the outer platform 104.

The airfoil 106 may further include a leading edge 112 spaced apart from a trailing edge 114. Additionally, the airfoil 106 may include a pressure side wall 116 and a suction side wall 118 each extending between the leading edge 112 and the trailing edge 114. The airfoil 106 may have a generally aerodynamic contour, such that the combustion gases 42 engage the leading edge 112 and are guided along the pressure side wall 116 and the suction side wall 118 to the trailing edge 114.

In exemplary embodiments, the stator vane 100 may define a cooling circuit 120 extending within the inner platform 102, the outer platform 104, and the airfoil 106 to provide convective cooling to the stator vane 100 during operation of the gas turbine 10. For example, the cooling circuit 120 may be in fluid communication with the compressor section 12, such that the cooling circuit 120 receives a flow of compressed cooling air from the compressor section 12. Particularly, the cooling circuit 120 may include a plurality of passages 122 extending span-wise (or radially) through the airfoil 106 and/or the inner platform 102 and the outer platform 104.

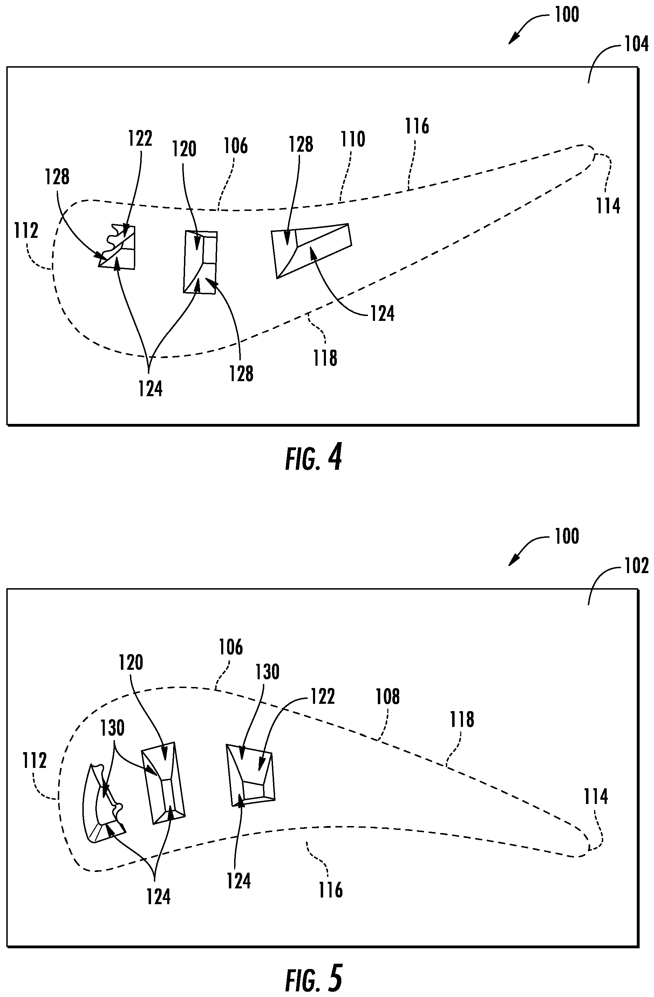

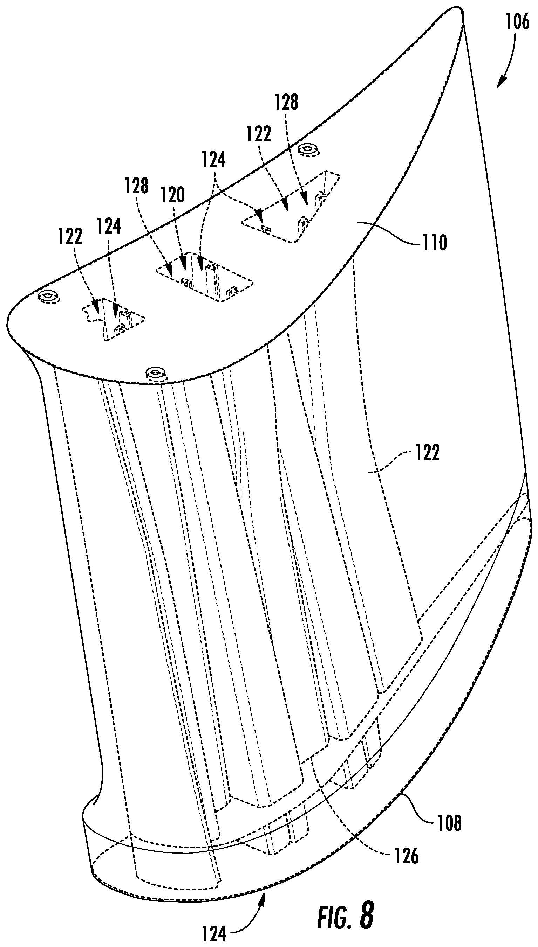

Each passage 122 of the plurality of passages 122 may extend (e.g., generally radially) from an inlet 124 defined in one of the base 108 or the tip 110 to a closed end 126 at the other of the base 108 or the tip 110 (as shown in FIGS. 8 through 10). FIG. 4 illustrates a planar view of the outer platform 104 of the stator vane 100 from along the radial direction R, and FIG. 5 illustrates a planar view of the inner platform 102 from along the radial direction R, in accordance with embodiments of the present disclosure. Particularly, FIGS. 4 and 5 illustrate the inlets 124 of the plurality of passages 122.

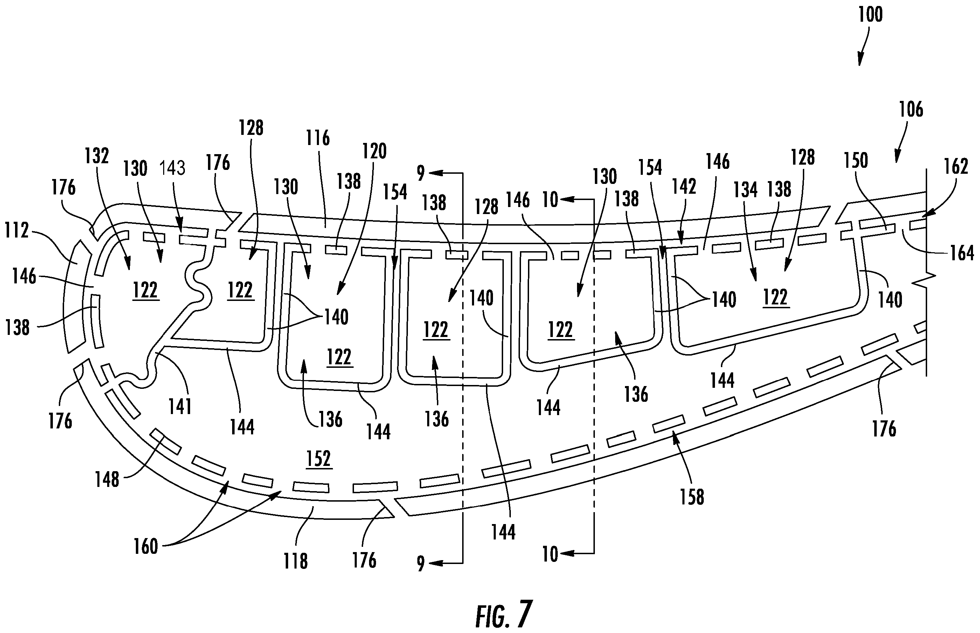

As shown in FIG. 4, the plurality of passages 122 may include outer wall passages 128 having inlets 124 defined through the tip 110 of the airfoil 106 and/or the outer platform 104 of the stator vane 100. Similarly, as shown in FIG. 5, the plurality of passages 122 may include inner wall passages 130 having inlets 124 defined through the base 108 of the airfoil 106 and/or the inner platform 102 of the stator vane 100. Additionally, as shown in FIG. 7, the plurality of passages 122 may include a leading edge passage 132, an aft passage 134, and one or more intermediary passages 136 disposed between the leading edge passage 132 and the aft passage 134. The leading edge passage 132 may be an inner wall passage 130, such that the inlet 124 of the leading edge passage is defined through the base 108 of the airfoil 106 and/or the inner platform 102 of the stator vane 100. By contrast, the aft passage 134 may be an outer wall passage 128, such that the inlet 124 of the aft passage 134 is defined through the tip 110 of the airfoil 106 and/or the outer platform 104 of the stator vane 100.

In exemplary embodiments, as shown by FIGS. 4 and 5 collectively, the inlets 124 of the plurality of passages 122 may be defined in one of the base 108 or the tip 110 of the airfoil 106 (and/or the inner or outer platform 102, 104 of the stator vane 100) in an alternating pattern with respect to a direction extending from the leading edge 112 to the trailing edge 114 of the airfoil 106. In this way, each passage 122 of the plurality of passages 122 may have an inlet defined in one of the base 108 or the tip 110 of the airfoil, and each passage 122 may neighbor another passage 122 having an inlet 124 defined in an opposite end of the airfoil 106 (e.g., the other of the base 108 or of the tip 110 compared to the neighboring passage(s) 122).

Particularly, the airfoil 106 illustrated in FIGS. 4 and 5 may include six passages 122, in which three are outer wall passages 128 and three are inner wall passages 132 in an alternating pattern, as described above. However, it should be appreciated that the airfoil 106 may include any suitable number of passages 122 and should not be limited to any particular number of passages 122 (including outer/inner wall passages 128, 130) or any particular pattern of passages 122, unless specifically recited in the claims.

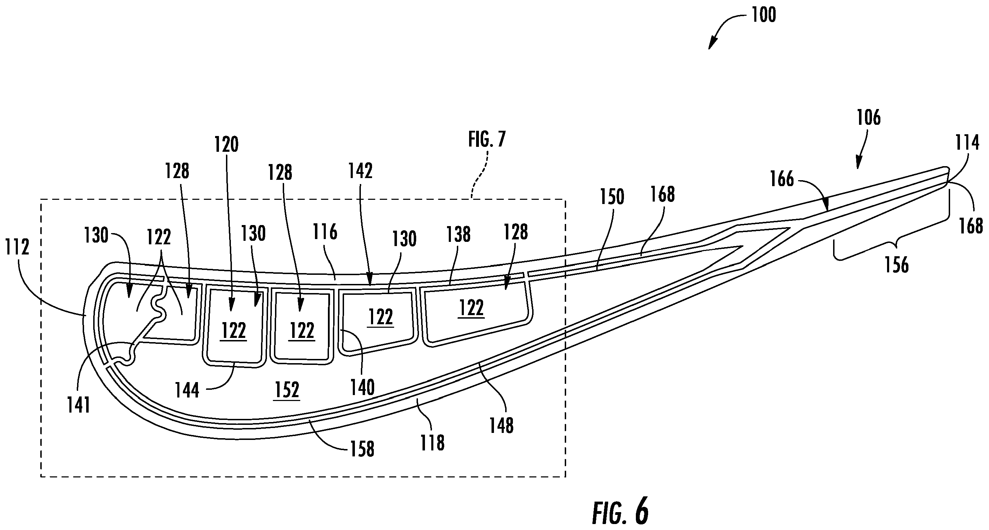

FIG. 6 illustrates a cross-sectional view of the stator vane 100 from along the line 6-6 shown in FIG. 3, and FIG. 7 illustrates an enlarged view of the outline detail shown in FIG. 6, in accordance with embodiments of the present invention. As shown in FIGS. 6 and 7, each passage 122 of the plurality of passages 122 is defined by a primary impingement wall 138 and a solid side wall 140

Particularly, the leading edge passage 132 may have a shared side wall 141 that at least partially defines both the leading edge passage 132 and the neighboring passage 122 of the plurality of passages. The shared side wall 141 may include one or more protrusions (such as a U-shaped protrusion) extending into the passages 122 that the shared side wall 141 partially defines. One or more of the passages 122 of the plurality of passages 122 may be generally rectangular in cross-sectional shape. In various embodiments, one or more of the passages 122 may be collectively defined by two solid side walls 140, a primary impingement wall 138, and a solid end wall 144. The solid end wall 144 is spaced apart from the primary impingement wall 138, and the two solid side walls 140 may extend between the solid end wall 144 and the primary impingement wall 138. The solid end wall 144 and the primary impingement wall 138 may be generally parallel to one another, and the two solid side walls 140 may be generally parallel to one another. As used herein, "solid" refers to a wall that does not include any apertures, passages, holes or other fluid permitting voids, such that the solid structure does not allow for fluid to pass therethrough.

According to the invention, the primary impingement wall 138 is spaced apart from one of the pressure side wall 116 or the suction side wall 118 such that a primary impingement gap 142 is defined therebetween. Particularly, the primary impingement wall 138 may be spaced apart from an interior surface of the pressure side wall 116, such that the primary impingement gap 142 is defined therebetween. In certain embodiments, the primary impingement wall 138 may be generally contoured to correspond with the pressure side wall 116, such that the primary impingement gap 142 may define a uniform distance along the entire radial span of the airfoil (e.g., from the base 108 to the tip 110) and along a majority of the pressure side 116 of the airfoil. One end of the shared side wall 141 may extend beyond the primary impingement wall 138 to the interior surface of the pressure side wall 116, and similarly the aft side wall 140 may extend beyond the primary impingement wall 138 to the interior surface of the pressure side wall 116, such that the shared side wall 141 and the aftmost side wall 140 bound the primary impingement gap 142.

According to the invention, the primary impingement wall 138 defines a plurality of impingement apertures 146 that direct air in discrete jets across the impingement gap to impinge upon an interior surface of the airfoil. For example, the plurality of impingement apertures 146 may be sized and oriented to direct the air in discrete jets to impinge upon the interior surface of the pressure side wall 116. The discrete jets of fluid may have a sufficient velocity and pressure to travel across the primary impingement gap 142 and impinge (or strike) the interior surface of the pressure side wall 116 (as opposed to fluid used for film cooling, which would be at a lower pressure and different orientation). The discrete jets of fluid impinge (or strike) the interior surface and create a thin boundary layer of fluid over the interior surface, which allows for optimal heat transfer between the pressure side wall 116 (or the suction side wall 118) and the fluid.

For example, the plurality of impingement apertures 146 may extend generally perpendicularly through the primary impingement wall 138, such that the plurality of impingement apertures 146 may orient pre-impingement fluid perpendicularly to the surface upon which it strikes, e.g., the interior surface of the pressure side wall 116. Once the fluid has impinged upon the interior surface, it may be referred to as "post-impingement fluid" and/or "spent cooling fluid" because the fluid has undergone an energy transfer and therefore has different characteristics. For example, the spent cooling fluid may have a higher temperature and lower pressure than the pre-impingement fluid because the spent cooling fluid has removed heat from the pressure side wall 116 during the impingement process.

As shown in FIG. 7, along the leading edge 112 of the airfoil 106, one end of the shared side wall 141 may extend beyond the primary impingement wall 138 to the interior surface of the pressure side wall 116 and the other end of the shared side wall 141 may extend beyond the primary impingement wall 138, such that the shared side wall 141 defines opposite boundaries of a leading edge impingement gap 143 between the interior surface of the leading edge 112 and the primary impingement wall 138.

As shown in FIGS. 6 and 7, the airfoil 106 may further include a suction side secondary impingement wall 148 and a pressure side secondary impingement wall 150 that partially define a collection chamber or plenum 152. Particularly, the collection chamber 152 may be collectively defined by the shared side wall 141, the solid end walls 144, the suction side secondary impingement wall 148, the pressure side secondary impingement wall 150, and one or more solid side walls 140. The collection chamber 152 may collect the post-impingement fluid that has exited the primary impingement wall 138 and impinged upon the interior surface of the pressure side wall 116.

In particular embodiments, the solid side walls 140 of neighboring passages 122 of the plurality of passages 122 collectively define a collection passage 154 that extends between the primary impingement gap 142 and the collection chamber 152. That is, two neighboring solid side walls 140, which each partially define separate (but neighboring) passages 122, may collectively define the collection passage 154 that extends between and fluidly couples the primary impingement gap 142 to the collection chamber 152. For example, the solid side wall 140 of a first passage of the plurality of passages 122 and the solid side wall 140 of an adjacent second passage of the plurality of passages 122 may collectively define the collection passage 154 extending between the primary impingement gap 142 and the collection passage 152. In this way, air may enter the airfoil 106 via the inlets 124 of the plurality of passages 122 and exit the plurality of passages 122 into the primary impingement gap 142 via the plurality of impingement apertures 146. Subsequently, the post-impingement air may travel through the collection passage 154 into the collection chamber 152. From the collection chamber 152, the air may then travel through the suction side secondary impingement wall 148 and the pressure side secondary impingement wall 150.

In many embodiments, the suction side secondary impingement wall 148 may extend from the solid side wall 140 of a leading edge passage 132 of the plurality of passages toward or to the trailing edge 114. Particularly, the suction side secondary impingement wall 148 may extend from the shared side wall 141 to a trailing edge portion 156. The pressure side wall 116, the suction side wall 118, the suction side secondary impingement wall 148, and the pressure side secondary impingement wall 150 may converge together at the trailing edge portion 156 of the airfoil 106. Additionally, the trailing edge portion 156 may define the trailing edge 114 of the airfoil 106.

In exemplary embodiments, the suction side secondary impingement wall 148 may be spaced apart from the suction side wall 118 such that a secondary impingement gap 158 is defined therebetween. Additionally, a plurality of impingement apertures 160 may be defined in the suction side secondary impingement wall 148 that direct air from the collection chamber 152 in discrete jets across the secondary impingement gap 158 to impinge upon an interior surface of the suction side wall 118. For example, the plurality of impingement apertures 160 may extend generally perpendicularly through the suction side secondary impingement wall 148, such that the plurality of impingement apertures 160 may orient fluid perpendicularly to the surface upon which it strikes, e.g., the interior surface of the suction side wall 118. In many embodiments, the suction side secondary impingement wall 148 may be contoured to correspond with the suction side wall 118, such that the secondary impingement gap 158 may define a uniform distance along the entire radial span of the airfoil (e.g., from the base 108 to the tip 110).

Similarly, in various embodiments, the pressure side secondary impingement wall 150 may extend from the solid side wall 140 of an aft passage 134 of the plurality of passages 122 toward or to the trailing edge 114. Particularly, the pressure side secondary impingement wall 150 may extend from solid side wall 140 of the aft passage 134 to the trailing edge portion 156. In exemplary embodiments, the pressure side secondary impingement wall 150 may be spaced apart from the pressure side wall 116 such that a secondary impingement gap 162 is defined therebetween. Additionally, a plurality of impingement apertures 164 may be defined in the pressure side secondary impingement wall 150 that direct air from the collection chamber 152 in discrete jets across the secondary impingement gap 162 to impinge upon an interior surface of the pressure side wall 116 aft of the passages 122. For example, the plurality of impingement apertures 164 may extend generally perpendicularly through the pressure side secondary impingement wall 150, such that the plurality of impingement apertures 164 may orient fluid perpendicularly to the surface upon which it strikes, e.g., the interior surface of the pressure side wall 116. In many embodiments, the pressure side secondary impingement wall 150 may be contoured to correspond with the aft portion of the pressure side wall 116, such that the secondary impingement gap 162 may define a uniform distance along the entire radial span of the airfoil (e.g., from the base 108 to the tip 110).

In many embodiments, the trailing edge portion 156 may define a trailing edge cooling circuit 166 fluidly coupled to the secondary impingement gap 158 (e.g., the suction side secondary impingement gap) and the secondary impingement gap 162 (e.g., the pressure side secondary impingement gap). As shown, the trailing edge cooling circuit 166 may extend from the secondary impingement gap 158 and the secondary impingement gap 162 to an outlet 168 at the trailing edge 114 of the airfoil 106.

In exemplary embodiments, as shown in FIG. 7, the airfoil 106 may further include one or more film cooling holes 176 defined through the pressure side wall 116 and/or the suction side wall 118. Each of the film cooling holes 176 may be in fluid communication with one of the primary impingement gap 142, the leading edge impingement gap 143, or either of the secondary impingement gaps 160 or 162. The film cooling holes 176 may advantageously provide a thin protective layer of air over the outside surface of the pressure side wall 116, the leading edge 112, and/or the suction side wall 118. The film cooling holes 176 may extend at an angle relative to the surfaces of the wall through which the film cooling hole 176 is defined. For example, a film cooling hole 176 defined through the pressure side wall 116 will extend at an angle (i.e., not perpendicularly) to the interior surface and/or the exterior surface of the pressure side wall 116.

FIG. 8 illustrates a perspective view of the airfoil 106, in which the plurality of passages 122 are shown with dashed lines. As shown, the inlets 124 of the plurality of passages 122 may be defined in one of the base 108 or the tip 110 of the airfoil 106 in an alternating pattern with respect to a direction extending from the leading edge 112 to the trailing edge 114 of the airfoil 106. In this way, each passage 122 of the plurality of passages 122 may have an inlet defined in one of the base 108 or the tip 110 of the airfoil, and each neighboring passage 122 may have an inlet 124 defined in an opposite end of the airfoil 106 (e.g., the other of the base 108 of the tip 110 than the neighboring passage(s) 122).

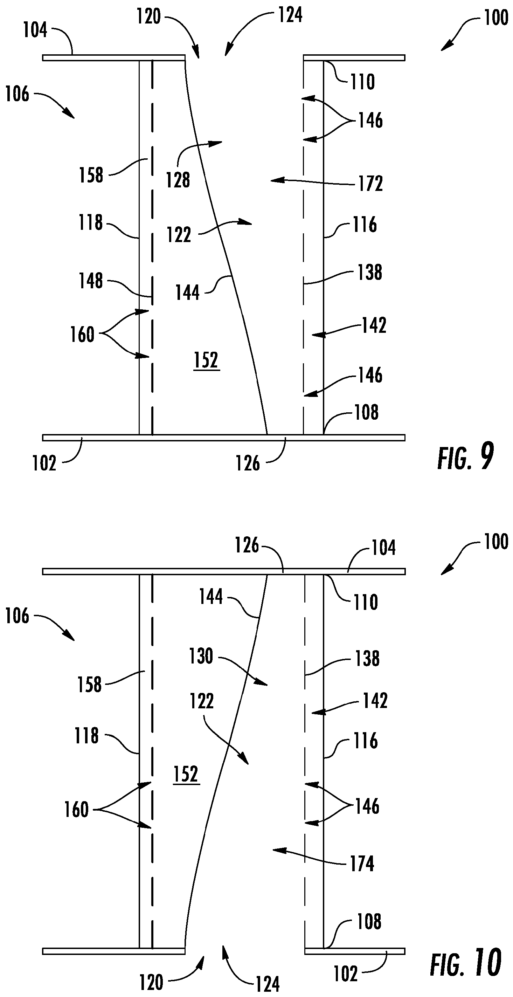

FIG. 9 schematically illustrates a cross-sectional view of the airfoil 106 from along the line 9-9 shown in FIG. 7, and FIG. 10 schematically illustrates a cross-sectional view of the airfoil 106 from along the line 10-10 shown in FIG. 7, in accordance with embodiments of the present disclosure. Particularly, FIG. 9 may illustrate a first passage 172 of the plurality of passages 122, and FIG. 10 may illustrate a second passage 174 of the plurality of passages. The first passage 172 and the second passage 174 may neighbor one another within the airfoil 106 (FIG. 7). Each passage 122 (including the first and second passages 172, 174) of the plurality of passages 122 may extend (e.g., generally radially) from an inlet 124 defined in one of the base 108 or the tip 110 to a closed end 126 at or proximate to the other of the base 108 or the tip 110. Additionally, the inlets 124 of the plurality of passages 122 may be defined in one of the base 108 or the tip 110 of the airfoil 106 in an alternating pattern with respect to a direction extending from the leading edge 112 to the trailing edge 114 of the airfoil 106. In this way, each passage 122 having an inlet 124 defined at the tip 110 may neighbor one or more passages 122 having an inlet defined at the base 108. For example, as shown in FIGS. 9 and 10, the first passage 172 may extend from an inlet 124 at the tip 110 to a closed end 126 at or proximate to the base 108. By contrast, the second passage 174 (which neighbors the first passage 172) may extend from an inlet 124 at the base 108 to a closed end 126 at or proximate to the tip 110.

Additionally, according to the invention, as shown collectively in FIGS. 7 through 10, each passage 122 of the plurality of passages 122 converges in cross-sectional area as the passage 122 extends from the inlet 124 to the closed end 126. For example, in some embodiments, each passage 122 may continually converge in cross-sectional area as the passage 122 extends from the inlet 124 to the closed end 126. This advantageously ensures that the air is exiting the plurality of passages 122 via the impingement apertures 146 with sufficient velocity and pressure to traverse the primary impingement gap 142 (at any spanwise or radial location of the airfoil 106). Particularly, the solid end wall 144 may converge towards the primary impingement wall 138 from the inlet 124 of the passage 122 to the closed end 126.

In many embodiments, the airfoil 106 described herein may be integrally formed as a single component. That is, each of the subcomponents, e.g., the primary impingement wall 138, the solid side walls 140, the solid end walls 144, and/or other subcomponents, may be manufactured together as a single body. In exemplary embodiments, this may be done by utilizing an additive manufacturing system and method, such as direct metal laser sintering (DMLS), direct metal laser melting (DMLM), or other suitable additive manufacturing techniques. In this regard, by utilizing additive manufacturing methods, the airfoil 106 may be integrally formed as a single piece of continuous metal and may thus include fewer sub-components and/or joints compared to prior designs. The integral formation of the airfoil 106 through additive manufacturing may advantageously improve the overall assembly process. For example, the integral formation reduces the number of separate parts that must be assembled, thus reducing associated time and overall assembly costs. Additionally, existing issues with, for example, leakage, joint quality between separate parts, and overall performance may advantageously be reduced. Further, the integral formation of the airfoil 106 may favorably reduce the weight of the airfoil 106 as compared to other manufacturing methods.

In other embodiments, other manufacturing techniques, such as casting or other suitable techniques, may be used.

This written description uses examples to disclose the invention, including the best mode, and also to enable any person skilled in the art to practice the invention, including making and using any devices or systems and performing any incorporated methods. The invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. An airfoil (56, 106) comprising:
a leading edge (112), a trailing edge (114), a base (108), and a tip (110);
a pressure side wall (116) and a suction side wall (118) extending between the leading edge (112), the trailing edge (114), the base (108), and the tip (110); and
a plurality of passages (122) defined within the airfoil (56, 106) and extending from an inlet (124) at one of the base (108) or the tip (110), **characterised in that** each passage (122) of the plurality of passages (122) is defined at least partially by a primary impingement wall (138) and a solid side wall (140), the primary impingement wall (138) spaced apart from one of the pressure side wall (116) or the suction side wall (118) such that a primary impingement gap (142) is defined therebetween, the primary impingement wall (138) defining a plurality of impingement apertures (146) that direct air in discrete jets across the primary impingement gap (142) to impinge upon an interior surface of the airfoil (56, 106);
wherein each passage (122) of the plurality of passages (122) extends from the inlet (124) at one of the base (108) or the tip (110) to a closed end (126) at the other of the base (108) or the tip (110);
wherein each passage (122) of the plurality of passages (122) converges in cross-sectional area as the passage (122) extends between the inlet (124) and the closed end (126).

2. The airfoil (56, 106) as in claim 1, wherein the inlets (124) of the plurality of passages (122) are defined in an alternating pattern in the base (108) and the tip (110) of the airfoil (56, 106) with respect to a direction extending from the leading edge (112) to the trailing edge (114) of the airfoil (56, 106), such that the inlets (124) are alternately in the base (108) and in the tip (110).

3. The airfoil (56, 106) as in claim 1, wherein the airfoil (56, 106) further includes a suction side secondary impingement wall (148) and a pressure side secondary impingement wall (150) that partially define a collection chamber (152).

4. The airfoil (56, 106) as in claim 3, wherein the solid side wall (140) of a first passage (122) of the plurality of passages (122) and the solid side wall (140) of an adjacent second passage (122) of the plurality of passages (122) collectively define a collection passage (154) extending between the primary impingement gap (142) and the collection chamber (152).

5. The airfoil (56, 106) as in claim 3, wherein the suction side secondary impingement wall (148) extends from the solid side wall (140) of a leading edge passage (132) of the plurality of passages (122) toward the trailing edge (114), wherein the suction side secondary impingement wall (148) is spaced apart from the suction side wall (118) such that a secondary impingement gap (158) is defined therebetween, and wherein a plurality of impingement apertures (160) is defined in the suction side secondary impingement wall (148) to direct air from the collection chamber (152) in discrete jets across the secondary impingement gap (158) to impinge upon an interior surface of the suction side wall (118).

6. The airfoil (56, 106) as in claim 3, wherein the pressure side secondary impingement wall (150) extends from the solid side wall (140) of an aft passage (134) of the plurality of passages (122) toward the trailing edge (114), wherein the pressure side secondary impingement wall (150) is spaced apart from the pressure side wall (116) such that a secondary impingement gap (162) is defined therebetween, and wherein a plurality of impingement apertures (164) is defined in the pressure side secondary impingement wall (150) to direct air from the collection chamber (152) in discrete jets across the secondary impingement gap (162) to impinge upon an interior surface of the pressure side wall (116).

7. The airfoil (56, 106) as in claim 6, wherein a trailing edge cooling circuit 166 is disposed within a trailing edge portion 156 of the airfoil (56, 106), the trailing edge cooling circuit (166) being fluidly coupled to the secondary impingement gap (162) and extending from the secondary impingement gap (162) to an outlet (168) at the trailing edge (114) of the airfoil (56, 106).

8. The airfoil (56,106) as in claim 6, wherein one or more film cooling holes (176) are defined through the pressure side wall (116) or the suction side wall (118), the one or more film cooling holes (176) being in fluid communication with one of the primary impingement gap (142) and the secondary impingement gap (162).

9. The airfoil (56, 106) as in claim 1, wherein the primary impingement wall (138) is contoured to correspond with the pressure side wall (116).

10. The airfoil (56, 106) as in claim 1, wherein the airfoil (56, 106) is integrally formed.

11. A stator vane (26, 100) comprising:
an inner platform (52, 102);
an outer platform (54, 104); and
an airfoil (56, 106) extending between a base (108) coupled to the inner platform (52, 102) and a tip (110) coupled to the outer platform (54, 104), the airfoil (56, 106) being defined according to any of claims 1 to 10.

12. The stator vane (26, 100) as in claim 11, wherein the stator vane (26, 100) is configured for installation in a first stage of a turbine section (22) of a gas turbine engine (10).

## Patentansprüche

1. Schaufelblatt (56, 106), umfassend:
eine Vorderkante (112), eine Hinterkante (114), eine Basis (108) und eine Spitze (110);
eine Druckseitenwand (116) und eine Saugseitenwand (118), die sich zwischen der Vorderkante (112), der Hinterkante (114), der Basis (108) und der Spitze (110) erstrecken; und
eine Vielzahl von Durchgängen (122), die innerhalb des Schaufelblatts (56, 106) definiert sind und sich von einem Einlass (124) an einem der Basis (108) oder der Spitze (110) erstrecken, **dadurch gekennzeichnet, dass** jeder Durchgang (122) der Vielzahl von Durchgängen (122) mindestens teilweise durch eine primäre Prallwand (138) und eine feste Seitenwand (140) definiert ist, wobei die primäre Prallwand (138) von einer der Druckseitenwand (116) oder der Saugseitenwand (118) derart beabstandet ist, dass ein primärer Prallspalt (142) dazwischen definiert ist, wobei die primäre Prallwand (138) eine Vielzahl von Prallöffnungen (146) definiert, die Luft in diskreten Strahlen über den primären Prallspalt (142) hinweg leiten, um auf eine interne Oberfläche des Schaufelblatts (56, 106) zu prallen;
wobei sich jeder Durchgang (122) der Vielzahl von Durchgängen (122) von dem Einlass (124) an einem der Basis (108) oder der Spitze (110) zu einem geschlossenen Ende (126) an dem anderen der Basis (108) oder der Spitze (110) erstreckt;
wobei jeder Durchgang (122) der Vielzahl von Durchgängen (122) in einem Querschnittsbereich konvergiert, wenn sich der Durchgang (122) zwischen dem Einlass (124) und dem geschlossenen Ende (126) erstreckt.

2. Schaufelblatt (56, 106) nach Anspruch 1, wobei die Einlässe (124) der Vielzahl von Durchgängen (122) in einem abwechselnden Muster in der Basis (108) und der Spitze (110) des Schaufelblatts (56, 106) in Bezug auf eine Richtung definiert sind, die sich von der Vorderkante (112) zu der Hinterkante (114) des Schaufelblatts (56, 106) derart erstreckt, dass die Einlässe (124) abwechselnd in der Basis (108) und in der Spitze (110) sind.

3. Schaufelblatt (56, 106) nach Anspruch 1, wobei das Schaufelblatt (56, 106) ferner eine saugseitige sekundäre Prallwand (148) und eine druckseitige sekundäre Prallwand (150) einschließt, die teilweise eine Sammelkammer (152) definieren.

4. Schaufelblatt (56, 106) nach Anspruch 3, wobei die feste Seitenwand (140) eines ersten Durchgangs (122) der Vielzahl von Durchgängen (122) und die feste Seitenwand (140) eines angrenzenden zweiten Durchgangs (122) der Vielzahl von Durchgängen (122) gemeinsam einen Sammeldurchgang (154) definieren, der sich zwischen dem primären Prallspalt (142) und der Sammelkammer (152) erstreckt.

5. Schaufelblatt (56, 106) nach Anspruch 3, wobei sich die saugseitige sekundäre Prallwand (148) von der festen Seitenwand (140) eines Vorderkantendurchgangs (132) der Vielzahl von Durchgängen (122) in Richtung der Hinterkante (114) erstreckt, wobei die saugseitige sekundäre Prallwand (148) von der Saugseitenwand (118) derart beabstandet ist, dass ein sekundärer Prallspalt (158) dazwischen definiert ist, und wobei eine Vielzahl von Prallöffnungen (160) in der saugseitigen sekundären Prallwand (148) definiert ist, um Luft aus der Sammelkammer (152) in diskreten Strahlen über den sekundären Prallspalt (158) hinweg zu leiten, um auf eine interne Oberfläche der saugseitigen Wand (118) zu prallen.

6. Schaufelblatt (56, 106) nach Anspruch 3, wobei sich die druckseitige sekundäre Prallwand (150) von der festen Seitenwand (140) eines hinteren Durchgangs (134) der Vielzahl von Durchgängen (122) in Richtung der Hinterkante (114) erstreckt, wobei die druckseitige sekundäre Prallwand (150) von der druckseitigen Wand (116) derart beabstandet ist, dass ein sekundärer Prallspalt (162) dazwischen definiert ist, und wobei eine Vielzahl von Prallöffnungen (164) in der druckseitigen sekundären Prallwand (150) definiert ist, um Luft aus der Sammelkammer (152) in diskreten Strahlen über den sekundären Prallspalt (162) hinweg zu leiten, um auf eine interne Oberfläche der druckseitigen Wand (116) zu prallen.

7. Schaufelblatt (56, 106) nach Anspruch 6, wobei ein Hinterkantenkühlkreislauf 166 innerhalb eines Hinterkantenabschnitts 156 des Schaufelblatts (56, 106) angeordnet ist, wobei der Hinterkantenkühlkreislauf (166) an den sekundären Prallspalt (162) fluidisch gekoppelt ist und sich von dem sekundären Prallspalt (162) zu einem Auslass (168) an der Hinterkante (114) des Schaufelblatts (56, 106) erstreckt.

8. Schaufelblatt (56, 106) nach Anspruch 6, wobei ein oder mehrere Filmkühlungslöcher (176) durch die Druckseitenwand (116) oder die Saugseitenwand (118) definiert sind, wobei das eine oder die mehreren Filmkühlungslöcher (176) in Fluidverbindung mit einem von dem primären Prallspalt (142) und dem sekundären Prallspalt (162) stehen.

9. Schaufelblatt (56, 106) nach Anspruch 1, wobei die primäre Prallwand (138) konturiert ist, um der Druckseitenwand (116) zu entsprechen.

10. Schaufelblatt (56, 106) nach Anspruch 1, wobei das Schaufelblatt (56, 106) einstückig ausgebildet ist.

11. Statorleitschaufel (26, 100), umfassend:
eine innere Plattform (52, 102);
eine äußere Plattform (54, 104); und
ein Schaufelblatt (56, 106), das sich zwischen einer Basis (108), die an die innere Plattform (52, 102) gekoppelt ist, und einer Spitze (110), die an die äußere Plattform (54, 104) gekoppelt ist, erstreckt, wobei das Schaufelblatt (56, 106) nach einem der Ansprüche 1 bis 10 definiert ist.

12. Statorleitschaufel (26, 100) nach Anspruch 11, wobei die Statorleitschaufel (26, 100) für eine Installation in einer ersten Stufe eines Turbinenabschnitts (22) eines Gasturbinentriebwerks (10) konfiguriert ist.

## Revendications

1. Profil (56, 106), comprenant :
un bord d'attaque (112), un bord de fuite (114), une base (108), et une pointe (110) ;
une paroi côté pression (116) et une paroi côté aspiration (118) s'étendant entre le bord d'attaque (112), le bord de fuite (114), la base (108) et la pointe (110) ; et
une pluralité de passages (122) définis au sein du profil (56, 106) et s'étendant depuis une entrée (124) au niveau de l'une parmi la base (108) ou la pointe (110), **caractérisé en ce que** chaque passage (122) de la pluralité de passages (122) est défini au moins partiellement par une paroi de contact primaire (138) et une paroi latérale pleine (140), la paroi de contact primaire (138) espacée de l'une parmi la paroi côté pression (116) ou la paroi côté aspiration (118) de telle sorte qu'un espace de contact primaire (142) est défini entre celles-ci, la paroi de contact primaire (138) définissant une pluralité d'ouvertures de contact (146) qui dirigent l'air en jets distincts à travers l'espace de contact primaire (142) pour venir en contact contre une surface intérieure du profil (56, 106) ;
dans lequel chaque passage (122) de la pluralité de passages (122) s'étend depuis l'entrée (124) au niveau de l'une parmi la base (108) ou la pointe (110) jusqu'à une extrémité fermée (126) au niveau de l'autre parmi la base (108) ou la pointe (110) ;
dans lequel chaque passage (122) de la pluralité de passages (122) converge en zone de section transversale lorsque le passage (122) s'étend entre l'entrée (124) et l'extrémité fermée (126).

2. Profil (56, 106) selon la revendication 1, dans lequel les entrées (124) de la pluralité de passages (122) sont définies selon un motif alterné dans la base (108) et la pointe (110) du profil (56, 106) par rapport à une direction s'étendant depuis le bord d'attaque (112) jusqu'au bord de fuite (114) du profil (56, 106), de telle sorte que les entrées (124) sont alternativement dans la base (108) et dans la pointe (110).

3. Profil (56, 106) selon la revendication 1, dans lequel le profil (56, 106) comporte en outre une paroi de contact secondaire côté aspiration (148) et une paroi de contact secondaire côté pression (150) qui définissent partiellement une chambre de collecte (152).

4. Profil (56, 106) selon la revendication 3, dans lequel la paroi latérale pleine (140) d'un premier passage (122) de la pluralité de passages (122) et la paroi latérale pleine (140) d'un second passage adjacent (122) de la pluralité de passages (122) définissent collectivement un passage de collecte (154) s'étendant entre l'espace de contact primaire (142) et la chambre de collecte (152).

5. Profil (56, 106) selon la revendication 3, dans lequel la paroi de contact secondaire côté aspiration (148) s'étend depuis la paroi latérale pleine (140) d'un passage de bord d'attaque (132) de la pluralité de passages (122) vers le bord de fuite (114), dans lequel la paroi de contact secondaire côté aspiration (148) est espacée de la paroi côté aspiration (118) de telle sorte qu'un espace de contact secondaire (158) est défini entre elles, et dans lequel une pluralité d'ouvertures de contact (160) sont définies dans la paroi de contact secondaire côté aspiration (148) pour diriger l'air depuis la chambre de collecte (152) en jets distincts à travers l'espace de contact secondaire (158) pour venir en contact contre une surface intérieure de la paroi côté aspiration (118).

6. Profil (56, 106) selon la revendication 3, dans lequel la paroi de contact secondaire côté pression (150) s'étend depuis la paroi latérale pleine (140) d'un passage arrière (134) de la pluralité de passages (122) vers le bord de fuite (114), dans lequel la paroi de contact secondaire côté pression (150) est espacée de la paroi côté pression (116) de telle sorte qu'un espace de contact secondaire (162) est défini entre elles, et dans lequel une pluralité d'ouvertures de contact (164) sont définies dans la paroi de contact secondaire côté pression (150) pour diriger l'air depuis la chambre de collecte (152) en jets distincts à travers l'espace de contact secondaire (162) pour venir en contact contre une surface intérieure de la paroi côté pression (116).

7. Profil (56, 106) selon la revendication 6, dans lequel un circuit de refroidissement de bord de fuite 166 est disposé au sein d'une partie de bord de fuite 156 du profil (56, 106), le circuit de refroidissement de bord de fuite (166) étant accouplé fluidiquement à l'espace de contact secondaire (162) et s'étendant depuis l'espace de contact secondaire (162) jusqu'à une sortie (168) au niveau du bord de fuite (114) du profil (56, 106).

8. Profil (56, 106) selon la revendication 6, dans lequel un ou plusieurs trous de refroidissement de film (176) sont définis à travers la paroi côté pression (116) ou la paroi côté aspiration (118), le ou les trous de refroidissement de film (176) étant en communication fluidique avec l'un parmi l'espace de contact primaire (142) et l'espace de contact secondaire (162).

9. Profil (56, 106) selon la revendication 1, dans lequel la paroi de contact primaire (138) est profilée pour correspondre à la paroi côté pression (116).

10. Profil (56, 106) selon la revendication 1, dans lequel le profil (56, 106) est formé d'un seul tenant.

11. Aube de stator (26, 100) comprenant :
une plate-forme interne (52, 102) ;
une plate-forme externe (54, 104) ; et
un profil (56, 106) s'étendant entre une base (108) accouplée à la plate-forme interne (52, 102) et une pointe (110) accouplée à la plate-forme externe (54, 104), le profil (56, 106) étant défini selon l'une quelconque des revendications 1 à 10.

12. Aube de stator (26, 100) selon la revendication 11, dans laquelle l'aube de stator (26, 100) est configurée pour être installée dans un premier étage d'une section de turbine (22) d'un moteur à turbine à gaz (10).
